# EUROPEAN PATENT APPLICATION

(11) **EP 4 756 642 A1**
(43) Date of publication of application: **10.06.2026**
(21) Application number: 25220454.0
(22) Date of filing: 03.12.2025
(51) Int. Cl.: G06F 16/3329

(54) **APPLICATION PROGRAMMING INTERFACE RESPONSE COMPRESSION**

(30) Priority: 09.12.2024 US 202418974590
(71) Applicant: Amazon Technologies, Inc., Seattle, WA 98108-1226 (US)
(72) Inventor: XU, Yumo, Seattle, Washington, 98109-5210 (US); GUNG, James, Seattle, Washington, 98109-5210 (US); VIRKAR, Yogesh, Seattle, Washington, 98109-5210 (US); GUPTA, Arshit, Seattle, Washington, 98109-5210 (US); CASTELLI, Vittorio, Seattle, Washington, 98109-5210 (US)
(74) Representative: Bosch Jehle Patentanwaltsgesellschaft mbH

(57) **Abstract**

Systems and methods are provided for an application programming interface (API) response compression system used in conjunction with API requests made by a large language model (LLM) agent in response to a prompt made to an LLM. The API response compression (ARC) system may receive an API response, generate a property manifest for the API response identifying a set of fields in the API response, generate a filtered property manifest identifying fields of the API response relevant to the prompt, generating a reduced API response, and processing the prompt and the reduced API response at the LLM to generate LLM output.

## Description

### BACKGROUND

Generally described, computing devices and communication networks can be utilized to exchange data or information. In a common application, a computing device can request content from another computing device via the communication network. For example, a client having access to a computing device can utilize a software application to request content from a server computing device via the network (e.g., the Internet). In such embodiments, the client's computing device can be referred to as a client computing device, and the server computing device can be referred to as a content provider.

In some applications, the network service provider can instantiate various network-based services that can process client requests for data. For example, network-services related to query processing or question answering assistants (e.g., chatbots) can correspond to network-based services that interact with humans to provide information (e.g., information about a network-based service, how to use the network-based service, etc.).

### BRIEF DESCRIPTION OF DRAWINGS

Embodiments of various inventive features will now be described with reference to the following drawings. Throughout the drawings, reference numbers may be reused to indicate correspondence between referenced elements. The drawings are provided to illustrate example embodiments described herein and are not intended to limit the scope of the disclosure. To easily identify the discussion of any particular element or act, the most significant digit(s) in a reference number typically refers to the figure number in which that element is first introduced.
FIG. 1 depicts a schematic diagram of a cloud provider network that implements an application programming interface (API) response compression system in accordance with aspects of the present disclosure.
FIG. 2. is a visualization of the environment of FIG. 1 depicting illustrative interactions between an LLM agent for query/prompt processing, an API endpoint, and an API response compression system to generate a compressed API response, in accordance with aspects of the present application.
FIG. 3 is a flow diagram illustrative of a routine for compressing API responses, in accordance with aspects of the present application.
FIG. 4 is a flow diagram illustrative of a routine for generating a compressed API response using a manifest builder, property selector, and response refiner of an API response compression system, in accordance with aspects of the present application.
FIG. 5 is a block diagram of an illustrative architecture of an API response compression system, in accordance with aspects of the present application.

### DETAILED DESCRIPTION

Generally described, aspects of the present disclosure relate to systems and methods for using application programming interface (API) response compression middleware to compress an API response, thus generating a "compressed" API response suitable for input into a large language model (LLM). An LLM may be understood as a type of machine learning model that uses artificial intelligence (AI) to generate human-like text in response to various types of input. LLMs may be generative AI models trained on large amounts of text data in order to generate new content based on the training data. LLMs may be instantiated and executed on a computer or any number of computing devices. In some examples, an LLM may use an LLM agent in order to interact with an endpoint (e.g., a network endpoint). An LLM agent may be understood as an LLM instance with additional interfacing code (e.g., an HTTP interface) that allows the output of the LLM instance in a given format (e.g., HTTP GET/POST) to result in a corresponding network call. Such an LLM agent may then receive the response to the network call and input this response back into the LLM instance. For example, an LLM may receive a prompt (e.g., from a human end user or computing system) that requires a related LLM agent to make a request to an API. In response, the API returns an API response to the LLM agent, and the LLM agent provides the API response as input to the LLM for use in generating output for the received prompt. However, APIs often return lengthy responses, and while these long API responses work well in traditional software applications, an API response with more information than required may not be well-suited for an LLM.

More specifically, inputting a lengthy API response into an LLM may result in accuracy ramifications for the LLM. By design, API responses often contain more information than required for a given task. Traditional software applications are able to deterministically locate the relevant information from an API response and discard the remaining irrelevant information. In contrast, LLMs are stochastic, driven by random probability distributions rather than deterministic logic. For this reason, an LLM operates with a certain probability of outputting inaccurate information, and the probability of inaccurate LLM output is increased when the LLM receives irrelevant input. Namely, inputting irrelevant information into an LLM may reduce the accuracy of the LLM's corresponding output. For this reason, inputting a "long" API response-or any API response that contains, in addition to the required relevant information, additional irrelevant information not required for the task at hand-into an LLM may subsequently reduce the accuracy of the corresponding LLM output.

In addition to reducing LLM output accuracy, inputting a longer-than-necessary API response into an LLM may also result in added latency for the LLM. The resource usage of an LLM is typically proportional to the number of tokens (e.g., basic units of text serving as the building blocks LLMs use to understand and generate text) involved in answering a prompt. A resource-intensive task for an LLM may be understood as a task requiring a high number of tokens, and a task requiring a higher number of tokens requires more computing power. In general, more computing power a task requires to complete, the more time will be required by that task. This additional required time can be understood as latency for the purposes of the present discussion. In the context of an LLM, added latency means that the LLM may suffer from slower response times to received prompts. Slower LLM response times result in a number of negative consequences, including increased operational costs and lower end user adoption rates. Because inputting a longer-than-necessary API response into an LLM often constitutes the usage of hundreds of thousands of LLM tokens, passing such an API response into an LLM typically results in added latency in the performance of the LLM. For example, an LLM receiving a longer-than-necessary API response may take so long to respond to a user's prompt due to added latency that the user gives up before receiving a response. In some cases, an API response may be too long to input into the LLM at all.

For example, a user may prompt an LLM for the email addresses of all attendees scheduled for meetings with the user on a given calendar day. In response to this prompt, an LLM agent may make a request to a calendar API, and this calendar API may return a longer-than-necessary API response that lists (in addition to the relevant data comprising attendee email addresses) many types of irrelevant calendar meeting data to the LLM agent. In this example, what the LLM needs from the calendar API response is not all meeting data (e.g., the meeting time, location, attachments, etc.), but rather relevant meeting data (e.g., the email addresses for each meeting attendee). In some instances, this API response may be lengthy by design: the calendar API may be designed to provide additional information in certain API response formats conducive to traditional software applications. In other instances, the particular task at hand may not correspond well to an available API response format, and thus the LLM agent must make the most appropriate call available (even if such a call results in an API response incorporating irrelevant information as well). In such a scenario, the LLM agent of the present example makes a call to the calendar API that returns an API response full of extraneous calendar meeting data because that particular calendar API call is the best way to retrieve meeting attendee email addresses from the calendar API. Even so, if the LLM agent then inputs this longer-than-necessary API response with all the irrelevant calendar meeting data directly into the LLM for use in generating output for the user's prompt, the LLM may suffer latency and accuracy concerns. Thus, as this example illustrates, a need exists for a method of compressing a longer-than-necessary API response contextually before returning the response in a compressed form to an LLM for use in generating output. More specifically, LLMs create a need for the ability to compress an API response such that the compressed API response excludes much or all of the information not relevant to the prompt provided to the LLM, all while retaining the original structure of the API response. Notably, for purposes of the present disclosure, the term "compression" refers to the removal of extraneous information (rather than referring to enabling the storage of effectively the same information in a smaller number of bits). For this reason, the relevant concept of "compression" as being the removal of extraneous information from an API response is also referred to throughout the present disclosure as "reducing" or "filtering" extraneous information from an API response.

The above challenges, among others, are addressed by the API response compression (ARC) system disclosed herein. Various aspects of the present disclosure relate to using the ARC system as middleware that identifies and reduces API responses before returning the newly filtered ("compressed") responses to an LLM for use in further query processing. In some embodiments, the ARC system may incorporate one or more machine-learning algorithms configured according to LLMs. Illustratively, various aspects of the present application correspond to identifying a API response received in response to an API call generated by an LLM agent, supplying the ARC system with the API response in order to generate a filtered API response, and returning the resulting filtered API response to the LLM for use in answering the prompt. In some embodiments, the ARC system may include three components for use in generating a filtered API response: a manifest builder, a property selector, and a response refiner. Using these three components, the ARC system may illustratively generate a property manifest, tailor the property manifest to select relevant properties, and refine the API response (e.g., recursively, iteratively, etc.) in order to generate a contextually filtered API response for use by an LLM.

Prior attempts to address accuracy and latency challenges faced by LLMs in the face of longer-than-necessary API responses required, at best, manual customization and updates to API response formats by developers and engineers. However, such manual customization attempts (in addition to being costly, prone to human error, inconsistent across large systems, and time-intensive) often still cannot solve the challenges created by longer-than-necessary API responses. Namely, LLMs often encounter queries that cannot possibly be predicted ahead of time by developers making customizations to API response formats in anticipation of such queries. Moreover, manual attempts at customization of API response formats often create more problems than they solve-opening the system up to the possibility that a necessary portion of an API response format is unknowingly altered or removed altogether during a customization. Thus, even though prior approaches aimed at manually shortening API responses may be executed fastidiously and with good intentions by developers, such manual customizations inevitably result in siloed, inconsistent, error-prone systems that still suffer from accuracy and latency challenges.

Assuming no attempts at manual customization are made by developers to address the challenges posed by longer-than-necessary API responses, LLMs face yet another type of negative outcome due to longer-than-necessary API responses: they may fail to produce output altogether. Namely, an LLM encountering an API response too lengthy to use may produce an error message, thus creating a negative experience for the end user or system supplying the prompt. This compromise in reliability negatively impacts user adoption rates and trust as well as the efficacy of systems relying on LLMs for complex problems involving API calls. For this reason, simply not addressing the issue presented by longer-than-necessary API responses is not a viable solution for function calling agents making use of APIs.

The present disclosure thus represents an improvement in the many generative AI systems that make use of function calling agents and APIs (and therefore computing systems in general), increasing the output accuracy of LLM agents while reducing the latency created in such agents by traditional lengthy API responses. The embodiments of the ARC system disclosed herein improve the ability of computing systems, such as cloud computing systems providing generative AI services, to implement such services without sacrificing the accuracy of generated output or creating additional latency from extraneous API response content. By providing orchestrators such as LLM agents with the relevant information within an API response required for a prompt while maintaining the original structure of the API response, the ARC system harnesses the capabilities of LLMs to improve upon LLM technology itself. In addition, the ARC system eliminates the need for developers or engineers to rebuild APIs in order to support the implementation of LLM agents, providing instead a scalable and consistent solution that can be implemented across even the largest distributed systems.

Various aspects of the present application will be discussed sequentially and in combination. However, each of the individual aspects may be individually implemented or combined with other implementations. Although aspects of the present disclosure will be described with regard to illustrative network components, interactions, and routines, one or more aspects of the present disclosure may be implemented in accordance with various environments, system architectures, customer computing device architectures, and the like. Similarly, references to specific devices, such as a user computing device, can be considered to be general references and not intended to provide additional meaning or configurations for individual user computing devices. Accordingly, the disclosed examples are illustrative in nature and should not be construed as limiting unless specifically indicated.

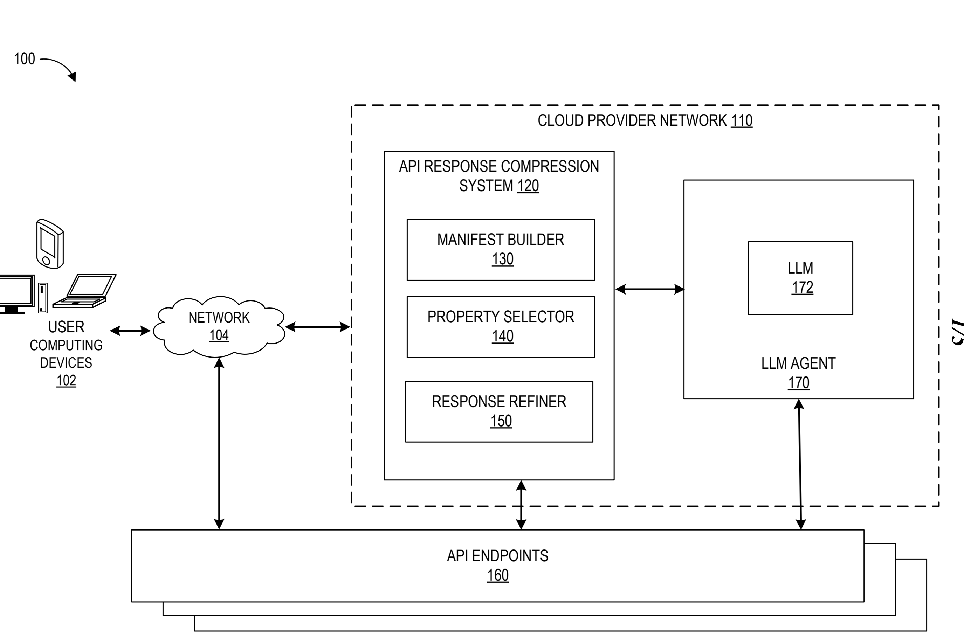

Turning now to the figures, FIG. 1 depicts a block diagram of an example environment 100 implementing an API response compression system 120 (hereafter "ARC system 120") in the context of a cloud provider network 110. Illustratively, the ARC system 120 may serve as middleware between an instance of an LLM 172 and various application programming interface endpoints 160 (hereafter "API endpoints 160"). In some embodiments, the ARC system 120 compresses API responses to requests made by the LLM agent 170 on behalf of the LLM 172 to an API endpoint 160. Upon compression of an API response, the ARC system 120 may output the resulting compressed API response to the LLM agent 170, and the LLM agent 170 may in turn pass the compressed API response as input to the LLM 172 as it generates output responsive to a prompt.

In some embodiments, a cloud provider network 110 may provide generative AI capabilities to user computing devices 102 through an LLM 172. Illustratively, the LLM 172 may be any trained machine learning model (e.g., a sequence-to-sequence model, also referred to as "Seq2Seq" model) that utilizes deep learning algorithms to process and understand natural language queries or prompts and generates outputs (e.g., texts, images, audio, video, etc.). The LLM 172 may be trained on a large corpus of data. Moreover, the LLM 172 may be a transformer-based network or other self-attention based network (e.g., an encoder-decoder transformer architecture or decoder-only transformer architecture). Additionally, the LLM 172 may process or compute an assortment of language tasks, such as translating languages, analyzing properties of an API response, chatbot conversations, and more. The LLM 172 may process or compute conversational textual data, identify one or more entities and relationships between them, and generate new text that is coherent and grammatically accurate.

As described herein, the LLM 172 may process a transcription based on a prompt and generate an output to perform an identified function indicated in the prompt. The prompt can also include additional input information, such as audio recordings, historical information, profile information, geographic identifiers, and the like. Additionally, the prompt can also include information that can identify the type or formatting of the generated output. The various aspects associated with the ARC system 120 can be implemented as one or more components that are associated with one or more functions, services, or machine learning models, among other components.

The user computing devices 102 in FIG. 1 may connect to the LLM 172 via the network 104, or the LLM 172 can reside on the user computing device 102. The user computing devices 102 can send natural language questions or prompts (e.g., input from a user via a user interface of the user computing devices 102) to the LLM 172 and receive generated outputs from the LLM 172 based on the natural language question or prompt. The user computing devices 102 may be configured to have at least one processor. That processor may be in communication with the memory for maintaining computer-executable instructions. The user computing devices 102 may be physical or virtual. The user computing devices 102 may be mobile devices, personal computers, servers, or other types of devices. The user computing devices 102 may have a display, speakers, or other output devices and input devices through which a user can interact with the user interface component.

The network 104, as depicted in FIG. 1, connects the devices and modules of the environment 100. The network can connect any number of devices. The network 104 may be a personal area network, local area network, wide area network, over-the-air broadcast network (e.g., for radio or television), cable network, satellite network, cellular telephone network, or combination thereof. As a further example, the network 104 may be a publicly accessible network of linked networks, possibly operated by various distinct parties, such as the Internet. In some embodiments, the network 104 may be a private or semi-private network, such as a corporate or university intranet. The network 104 may include one or more wireless networks, such as a Global System for Mobile Communications (GSM) network, a Code Division Multiple Access (CDMA) network, a Long-Term Evolution (LTE) network, or any other type of wireless network. The network 104 can use protocols and components for communicating via the Internet or any of the other aforementioned types of networks. For example, the protocols used by the network 104 may include Hypertext Transfer Protocol (HTTP), HTTP Secure (HTTPS), Message Queue Telemetry Transport (MQTT), Constrained Application Protocol (CoAP), and the like. Protocols and components for communicating via the Internet or any of the other aforementioned types of communication networks are well known to those skilled in the art and, thus, are not described in more detail herein.

The cloud provider network 110 may provide on-demand, scalable computing platforms to user computing devices 102 through the network 104. For example, the cloud provider network 110 allows users to have at their disposal scalable "virtual computing devices" via their use of compute servers (which provide compute instances via the usage of one or both of central processor units ("CPUs") and graphics processing unites ("GPUs"), optionally with local storage) and block store servers (which provide virtualized persistent block storage for designated compute instances). These virtual computing devices have attributes of a personal computing device including hardware (various types of processors, local memory, random access memory ("RAM"), hard-disk and/or solid-state drive ("SSD") storage), a choice of operating systems, networking capabilities, and pre-loaded application software. Each virtual computing device may also virtualize its console input and output (e.g., keyboard, display, and mouse). This virtualization allows users to connect to their virtual computing device using a computer application such as a browser, application programming interface, software development kit, or the like, to configure and use their virtual computing device just as they would a personal computing device. Unlike personal computing devices, which possess a fixed quantity of hardware resources available to the user, the hardware associated with the virtual computing devices can be scaled up or down depending upon the resources the user requires.

An API may be understood as an interface and/or communication protocol between a client and a server, such that if the client makes a request in a predefined format, the client should receive a response in a specific format or initiate a defined action. APIs may have specific locations within the API allowing for clients to interact with an API resource, and this specific location may be called an API endpoint 160. As depicted in illustrative FIG. 1, the API endpoints 160 may be URLs acting as the point of contact between the API client and the API server. In some embodiments, API endpoints 160 may exist outside of the cloud provider network 110.

In an alternative embodiment (not pictured), API endpoints 160 may exist within the cloud provider network 110, providing a gateway for clients to access cloud infrastructure by allowing clients to obtain data from or cause actions within the cloud provider network, enabling the development of applications that interact with resources and services hosted in the cloud provider network 110. Such API endpoints 160 may also enable different services of the cloud provider network to exchange data with one another. Users can choose to deploy their virtual computing systems to provide network-based services for their own use and/or for use by their clients.

A user may connect to the LLM 172 over a network 104 via a user computing device 102. More specifically, a user may speak or type a prompt for the LLM 172 into a user computing device 102 that delivers the prompt to the LLM 172 over the network 104. In an alternative embodiment, a computing system or device may provide automated prompts to the LLM 172. The LLM 172 may be part of a larger generative AI service comprising multiple LLM instances provided by the cloud provider network 110 for query/prompt processing and other AI-based tasks. The LLM 172 may make use of probability distributions resulting from training data to dynamically predict and generate the most accurate and appropriate output in the context of a given prompt.

An LLM 172 may include additional interfacing code that enables the LLM 172 to interact with an API endpoint 160: this additional interfacing code may be called an LLM agent 170. In some embodiments, the LLM agent 170 may be an orchestrator or function calling agent of the LLM 172. Illustratively, an LLM agent 170 may include an LLM 172 and an HTTP interface that allows the output of the LLM 172 matching a given format (e.g., HTTP GET/POST) to result in a corresponding network call to an API endpoint 160. The LLM agent 170 may receive an API response back from the API endpoint 160 and then provide this API response to the LLM 172 as input.

More specifically, upon receiving a prompt (e.g., a query) at the LLM 172 that involves a network call, the LLM agent 170 may make a request to the relevant an API endpoint 160 (e.g., over the network 104) as part of the process of gathering the relevant information required for generating output responsive to the prompt. In response to the request from the LLM agent 170, the API endpoint 160 may return an API response to the LLM agent 170, providing the requested information. In some embodiments, this API response may be too long to be passed by the LLM agent 170 directly into the LLM 172 (or may otherwise be determined to contain extraneous information), and thus the API response will be sent to the ARC system 120 by the LLM agent 170 for compression before inputting it (in reduced/filtered form) back into the LLM 172. In this way, the LLM agent 170 uses the ARC system 120 as compression middleware for API responses before providing the reduced API responses to the LLM 172, thus mitigating the latency and accuracy issues the LLM 172 may otherwise encounter if the API response was not reduced by the ARC system 120 before input into the LLM 172.

In some embodiments, the ARC system 120 functions to find the elements of an API response relevant to a given query presented to the LLM 172 in order to generate a reduced API response. To deduce which elements of an API response are relevant for generating a reduced API response, the ARC system 120 may implement a three stage process. In the first stage, the ARC system 120 may identify the elements present in an API response. In the second stage, the ARC system 120 may filter the elements identified at the first stage down to those elements which are related to the query at hand. In the third stage, the ARC system 120 may generate a reduced response using the relevant elements from the second stage. In this way, the three stage process results in a reduced API response that may be passed by the LLM agent 170 as input into the LLM 172. Illustratively, the ARC system 120 may include three subcomponents, and each of the subcomponents of the ARC system 120 may correspond to one of the three stages of the compression process of the ARC system 120. More specifically, an example ARC system 120 may include the following three subcomponents: a manifest builder 130, a property selector 140, and a response refiner 150.

In the first stage, the ARC system 120 may use a subcomponent called the manifest builder 130 to identify the elements present in an API response provided to the ARC system 120 by the LLM agent 170. Illustratively, the manifest builder 130 may generate a property manifest (e.g., a list of elements present in the API response). In some embodiments, a manifest builder 130 generates a list of elements for responses from a given API endpoint 160, optionally enabling the generation a dynamic property manifest based on an actual API response provided by the LLM agent 170 to the ARC system 120 for compression. In this way, in such an embodiment, the manifest builder 130 could generate a property manifest without the use of a specific API response.

In the second stage, the ARC system 120 may include a subcomponent called the property selector 140 to filter the elements identified in the property manifest down to those elements which are related to the query at hand. Illustratively, the property selector 140 may filter the elements of the property manifest based on salience and relevance in relation to the prompt provided to the LLM 172, thus generating a filtered property manifest with relevant elements for use in the third stage.

In the third stage, the ARC system 120 may include a subcomponent called the response refiner 150 to generate a reduced response using the filtered property manifest of relevant elements from the second stage. Illustratively, the response refiner 150 may reduce (e.g., recursively, iteratively, etc.) the API response based on the elements selected by the property selector 140 in the filtered property manifest. Upon completing this reduction of the API response, the response refiner 150 may then output the resulting reduced API response (which illustratively maintains the same structure as the original API response) to the LLM agent 170. In turn, the LLM agent 170 may pass the reduced API response as input to the LLM 172 for use in generating output responsive to the given prompt.

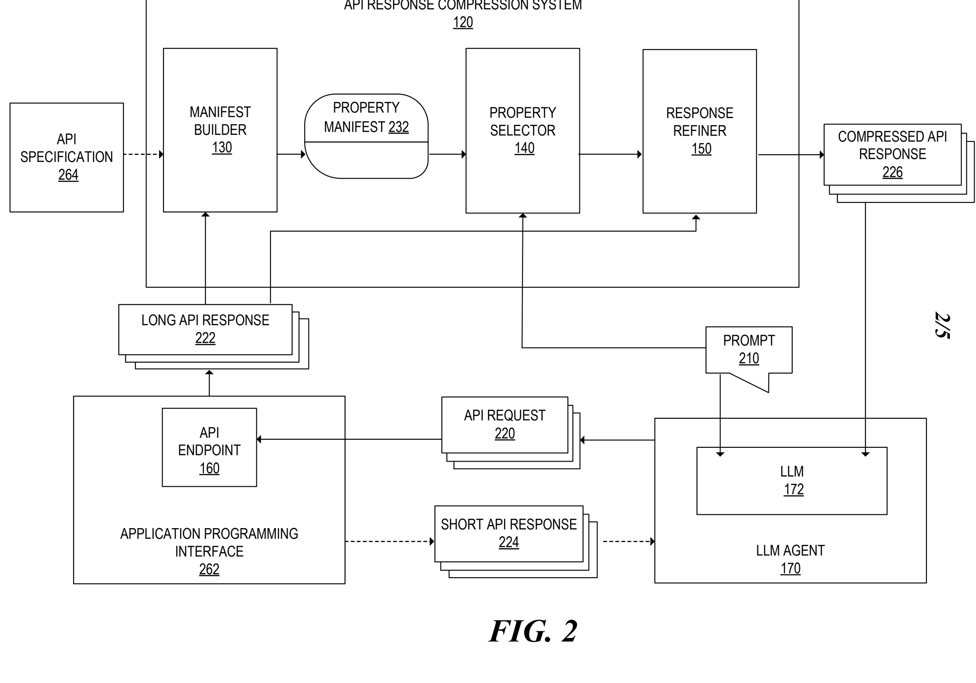

FIG. 2. is a visualization 200 of the environment 100 of FIG. 1 depicting illustrative interactions between an LLM agent 170, an API endpoint 160, and an ARC system 120 to generate a compressed API response 226 for use by an LLM 172, in accordance with aspects of the present disclosure. In one embodiment, the interactions of FIG. 2 are initiated when a prompt 210 is received by the LLM 172. The prompt 210 may consist of user input from a user computing device 102, or in alternative embodiments, the prompt 210 may be generated automatically from a computing device internal to the cloud provider network 110. In another alternative embodiment, the prompt 210 may be generated by an LLM: for example, LLM 172 may generate a prompt 210 for a second LLM (not pictured). In another embodiment, LLM agents may generate prompts 210 for other LLM agents or even themselves (e.g., LLM agent 170 may generate a prompt 210 for itself). In some embodiments, the prompt 210 represents multiple interactions or queries within a conversation with the LLM 172, sometimes referred to as "prompt chaining." In this way, when the prompt 210 represents an entire chain of prompts, the LLM 172 (a conversational model in some embodiments) may receive nuanced context for multi-step or complex prompting from a user before actioning on the prompt 210.

In some embodiments, the LLM agent 170 (e.g., an orchestrator) may be a function calling agent powered by an LLM 172 that may generate an output with instructions to interact with API endpoints 160 by calling (e.g., making a request to) specific functions of an API 262 to perform tasks. In this way, the LLM agent 170 may dynamically designate a given API request 220 as appropriate for the prompt 210 at hand. For example, a chat-based generative AI service may support a list of function calling APIs, and when a user interacts with the LLM 172, the supported function calling API may generate actions or output messages to the LLM agent 170, which then passes such actions/output messages to the LLM 172 for output to the user.

Once the LLM 172 receives the prompt 210, the LLM agent 170 may predict whether a function call is needed in order to produce output responsive to the prompt 210. For example, a prompt 210 asking the LLM 172 to "summarize open issues in a code repository" might cause the LLM agent 170 to predict that a function call is needed to answer the prompt 210 (namely, an API request 220 to the code repository asking for a list of the repositories as well as a list of open issues in those repositories). When the LLM agent 170 determines a function call is needed, it sends an API request 220 to the API endpoint 160 of the API 262 pertinent to the prompt 210.

Next, the API endpoint 160 will generate an API response to return to the LLM agent 170 in response to the API request 220 made by the LLM agent 170. In some embodiments at this point, an optional decision block is reached by the LLM agent 170 in which the LLM agent 170 classifies the API response received from the API endpoint 160 as a "long" API response 222 or a "short" API response 224. In some embodiments, factors such as (but not limited to) calculated token length, token count, number of properties in an API response, or number of entries in the API response may be included a length determination (e.g., calculated by the LLM agent 170) of "long" or "short" for an API response. In another embodiment, no optional decision block exists for the LLM agent 170 upon receiving an API response back from the API endpoint 160 because the LLM agent 170 is configured to pass all API responses, regardless of length (e.g., "long" or "short") into the ARC system 120 for compression/reduction. In yet another alternative embodiment, the LLM agent 170 passes the API response to the ARC system 120 for compression in response to detecting that the LLM 172 produced an error message (e.g., an error message alerting that the attempted API response input is too long for input into the LLM 172).

In some alternative embodiments, if the API endpoint 160 returns a short API response 224 to the LLM agent 170, the LLM agent 170 may not pass the short API response 224 to the ARC system 120 for compression because the API response length is already within an acceptable range for optimum functioning of the LLM 172. However, in such an embodiment, if the API endpoint 160 returns a long API response 222 to the LLM agent 170, the LLM agent 170 may pass the long API response 222 to the ARC system 120 for compression. More specifically, the LLM agent 170 passes the long API response 222 as input to the manifest builder 130 as well as the response refiner 150, as will be discussed in more detail herein.

In some embodiments, the compression/reduction of a long API response 222 by the ARC system 120 begins at the manifest builder 130. The task of the manifest builder 130 is to generate a property manifest 232 (which may, in turn, be used as input to the property selector 140 later in the compression process). Illustratively, a property manifest 232 may list fields present in the long API response 222. Notably, in some examples, the property manifest 232 may describe fields (e.g., email address, date, time) without including the values within the fields (e.g., jane.smith@email.net, November 30^{th}, 11:00 AM). In such an example, the property manifest 232 may describe fields (and not values) by design because, among other reasons, an API response 222 often consists primarily of value data (as opposed to field data, which often occurs at much lower proportions with respect to the overall API response length). Thus, by using fields in an illustrative property manifest 232, the manifest builder 130 may avoid the need to process a bulk of the long API response 222 (e.g., value data), thus saving computational resources, time, and costs related to operating the LLM 172 while reducing overall latency for the LLM 172. In some examples, if multiple values exist for a given field, the property manifest 232 may include a unique path (e.g., within a nested JSON tree structure) to each field in the API response (as opposed to a unique path to each value within a given field). However, in alternative embodiments, the manifest builder 130 may build a property manifest 232 from both fields and values found within the long API response 222.

In some embodiments, the property manifest 232 may not describe all fields from the long API response 222. Instead in such embodiments, the property manifest 232 may include a subset of fields (also referred to as "properties" or "elements") that occur in the actual API response 222. In this way, the inclusion of certain irrelevant fields in the property manifest 232 may be avoided. However, in alternative embodiments, a property manifest 232 may describe all fields contained in the API response 222.

In an alternative embodiment, the manifest builder 130 may not receive a specific API response (e.g., long API response 222) as input, instead generating a property manifest of relevant elements/fields based on information provided by the API endpoint 160 to the manifest builder 130. For this reason, an API response (long or short) may not be required as input to the manifest builder 130 in certain embodiments.

In some embodiments, the manifest builder 130 optionally receives an API specification 264 as input in addition to the long API response 222. An API specification 264, while not required by the ARC system 120 in some embodiments, provides additional context for the fields in the API response as the property manifest 232 is generated by the manifest builder 130. An API specification 264 may contain, for example, descriptions of each field, possible data types for the fields, and any other such metadata associated with the fields that allows the manifest builder 130 to more accurately generate a property manifest 232. In some embodiments, the manifest builder 130 may be instantiated as a machine learning model (e.g., an LLM or other sequence-to-sequence model) instructed to collect fields (and values, as applicable) from an API endpoint 160, long API response 222, short API response 224, and/or an API specification 264, used to generate a property manifest 232. In another embodiment, the manifest builder 130 may be instantiated as a regular expression or other parsing software instructed to collect fields (and values, as applicable) from an API endpoint 160, long API response 222, short API response 224, and/or an API specification 264 used to generate a property manifest 232.

Once the manifest builder 130 completes the generation of the property manifest 232, the manifest builder 130 outputs the property manifest 232. The property selector 140 subsequently receives the property manifest 232 as input for the next step in the compression process of the ARC system 120. Additionally, the property selector 140 receives the prompt 210 originally provided to the LLM agent 170 as input at this step. The property selector 140 may make use of a machine learning model (e.g., an LLM or other sequence-to-sequence model) by instructing the machine learning model to select the most relevant properties (e.g., fields) from the property manifest 232. Notably, this machine learning model may be separate from the LLM 172 in some embodiments. Meanwhile in other embodiments, the machine learning model of the property selector 140 may be the same as the LLM 172. In some embodiments, the property selector's 140 prompt to the machine learning model may direct the machine learning model to select properties based on salience and relevance estimations of each property in the property manifest 232. To do this, the property selector 140 may make use of the prompt 210, providing it to the machine learning model as further context for the salience and relevance determination.

Illustratively, the property selector 140 has completed its task when the resulting filtered property manifest 232 has been reduced to the properties required to answer the prompt 210. Because API responses (e.g., the long API response 222) may be nested code (e.g., in JavaScript Object Notation, also called "JSON"), a list of individual properties may each in fact contain lists of further nested properties. For this reason, in some embodiments, the output of the property selector 140 takes the form of JSON paths allowing for deterministic selection of the properties and values needed from the long API response 222. In some alternative embodiments, an additional call to a machine learning model (e.g., an LLM or other sequence-to-sequence model) can be made by the property selector 140 in order to conduct a quality check on the resulting filtered property manifest 232.

The resulting filtered property manifest 232 is output from the property selector and provided to the response refiner 150 as input. As previously mentioned, the response refiner 150 also receives the long API response 222 as input at this step. Using the filtered property manifest 232 output from the property selector 140 and the long API response 222, the response refiner 150 prunes the long API response 222 down so that it contains the fields and values (e.g., chosen by the property selector 140 and designated in the filtered property manifest 232) as being relevant to the prompt 210. In this way, the resulting compressed API response 226 generated by the response refiner 150 at this step contains properties relevant to the prompt 210, while maintaining the original structure (e.g., nested JSON structure) of the long API response 222. In some embodiments, in order to keep the original structure of nested JSON code intact during this step, a path tree is constructed based on the JSON paths of the selected properties in the filtered property manifest 232. The irrelevant content outside of such paths may then be removed (e.g., recursively, iteratively, etc.) from the long API response 222 where it is not necessary, resulting in the final compressed API response 226.

In an alternative embodiment, a response refiner 150 may refine a long API response 222 to a reduced length using masking techniques. For example, some long API responses have properties that include a Uniform Resource Locator ("URL") that is thousands of characters long. In such an example, the response refiner 150 may replace this "long" URL with a shorter placeholder for that URL, thus generating a compressed API response 226 for input at the LLM 172. In this example, the shorter placeholder may be replaced with the full URL again before the final output is generated by the LLM 172 to the prompt 210.

In yet another embodiment, a response refiner 150 may make use of a machine learning model (e.g., an LLM or other sequence-to-sequence model) by instructing the machine learning model to generate a compressed API response 226 from input such as the filtered property manifest 232 and the long API response 222.

Once the compressed API response 226 is generated by the response refiner 150, the compressed API response 226 is provided back to the LLM agent 170. At this point, the LLM agent 170 may use the compressed API response 226 to answer the prompt 210, or in alternative embodiments, the LLM agent 170 may call another function based on the compressed API response 226, thus repeating the compression flow depicted in FIG. 2. In this way, the ARC system 120 reduces resource usage and time for the LLM agent 170 to process the API response, or alternatively enables it to process the API response when its unprocessed counterpart is too large for the context window of the LLM agent 170.

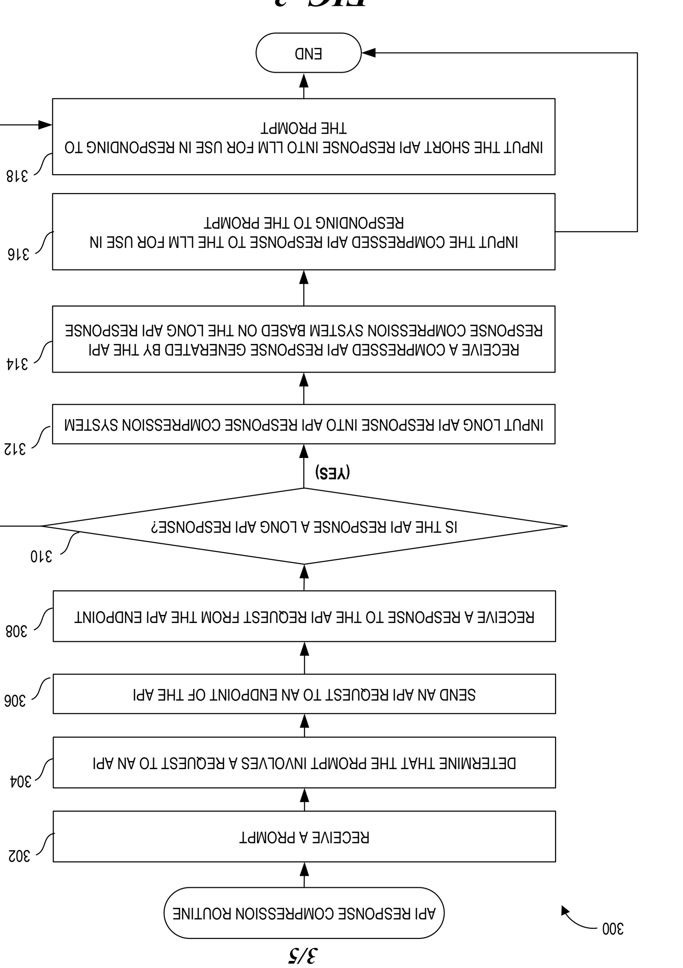

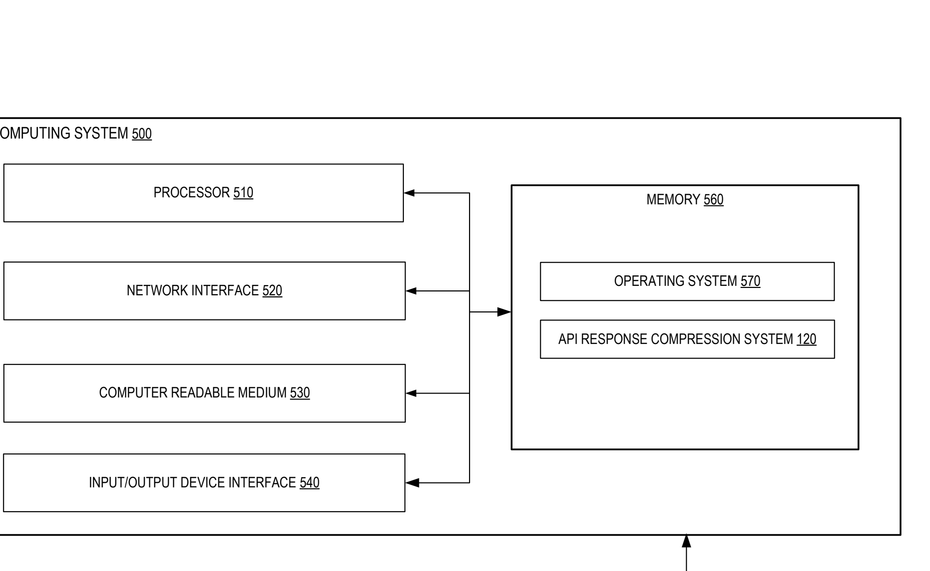

FIG. 3 is a flow diagram illustrative of a routine 300 for compressing long API responses, in accordance with aspects of the present application. The routine 300 may begin automatically upon receiving a prompt 210 from a computing device at the LLM 172, or it may be initiated by a client or end-user on an ad hoc basis. The client or end-user may use an interactive system to initiate routine 300 or schedule it in advance. The routine 300 may be embodied in a set of executable program instructions stored on a computer-readable medium, such as one or more disk drives of a computing system of a node or a server. When the routine 300 is initiated, the executable program instructions can be loaded into memory, such as random access memory ("RAM"), and executed by one or more processors of a computing system, such as the ARC system 120 shown in FIG. 5.

The routine 300 begins at block 302, in which the LLM 172 receives a natural language prompt 210. At block 304, the LLM agent 170 determines (e.g., predicts) that answering the prompt 210 involves sending an API request 220 to an API 262, specifically an API endpoint 160 of the API 262. Thus at block 306, the LLM agent 170 sends an API request 220 to the API endpoint 160. In turn, at block 308, the response to the API request 220 is generated by the API 262 and sent from the API endpoint 160 to the LLM agent 170. Thus, decision block 310 is reached, at which point the LLM agent 170 generates a determination as to whether the API response generated by the API endpoint 160 may be labeled a "long" API response 222 for purposes of the ARC system 120's compression processes. When an API response is not long, the routine may proceed to block 318, where the short API response 224 is input into the LLM agent 170 for use in generating responsive output to the prompt 210, thus ending the routine. However, if instead at decision block 310, the API response is a long API response 222, the routine proceeds to block 312.

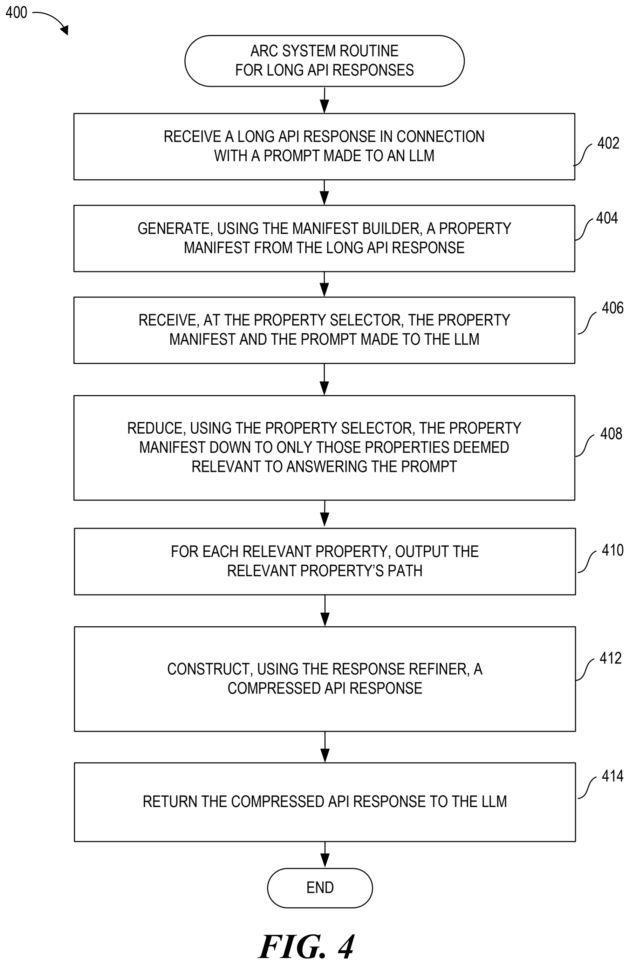

At block 312, the long API response 222 is input to the ARC system 120 for compression (see the discussion of FIG. 4 for a detailed routine 400 describing the compression techniques of the ARC system 120 occurring within block 312 of routine 300). Upon completion of routine 400 within block 312, the resulting compressed API response 226 is received at block 314. Notably, the compressed API response 226 is based on the long API response 222 and retains its original path structure (e.g., JSON structure), according to some embodiments. The routine then concludes at block 316, in which the compressed API response 226 is input to the LLM agent 170 for use in generating responsive output to the prompt 210. Notably, in alternative embodiments, routine 300 may repeat rather than generating responsive output at block 316.

FIG. 4 is a flow diagram illustrative of a routine 400 for generating a compressed API response 226 using a manifest builder 130, a property selector 140, and response refiner 150 of an ARC system 120, in accordance with aspects of the present disclosure. The calendar API example presented previously in this disclosure (namely, the example of a user prompting an LLM for the email addresses of all attendees scheduled for meetings with the user on a given calendar day) will be discussed throughout the description of routine 400 as one illustrative example of routine 400. As such, assume user Jane Smith provides the following prompt to the LLM 172: "Provide the email addresses of all attendees scheduled for meetings with Jane Smith on November 30." The LLM agent 170 may accordingly make an API request 220 to a calendar API for Jane's calendar meeting data, and this calendar API may return a longer-than-necessary API response 222 that lists (in addition to the relevant data comprising attendee email addresses) many types of irrelevant calendar meeting data (e.g., the meeting time, location, attachments, etc.).

Routine 400 thus begins at block 402, where the manifest builder 130 receives a long API response 222 in connection with a prompt 210 made to an LLM agent 170. In the calendar API example, the manifest builder 130 receives a calendar API response listing meeting time, location, meeting attachments, meeting attendee names, and meeting attendee emails for Jane's calendar. Notably in some embodiments, the long API response 222 may be generated from another user or system trigger instead of from a prompt 210 to an LLM. For example, the calendar API response may be returned due to an automated internal system trigger as part of a larger automated process rather than a direct prompt from Jane.

At block 404, the manifest builder 130 generates a property manifest 232 from the long API response 222 (and in addition, the API specification 264). In some embodiments, the API specification 264 is an optional input for block 404. For example, the calendar API provides a calendar API specification to the manifest builder 130 that lists all possible fields that could be returned by the calendar API as well as descriptions of those fields and their data types. Note that in this example, if the calendar API had not provided a calendar API specification, the manifest builder 130 could alternatively generate a property manifest 232 from the long calendar API response alone.

At block 406, the property selector 140 receives the property manifest 232 and the prompt 210 as input. For example, the property selector 140 receives Jane's prompt and a property manifest 232 that lists the following fields from the calendar API: meeting time, location, meeting attachments, meeting attendee names, and meeting attendee emails.

Next, at block 408, the property selector 140 reduces the property manifest 232 down to those properties deemed relevant (e.g., by an LLM prompted by the property selector 140) to answering the prompt 210. For example, the property selector 140 may prompt an LLM (not pictured) for relevant properties to Jane's prompt, and the LLM may return the following fields: meeting attendee names and meeting attendee emails.

At block 410, the property selector 140 illustratively outputs a path (e.g., JSON path) for each property deemed relevant from block 408. For example, the property selector 140 may generate a filtered property manifest 232 that simply lists JSON paths to the fields "meeting attendee name" and "meeting attendee email" within the long calendar API response 222.

In this way, at block 412, the response refiner 150 may take the output from block 410 and construct a compressed API response 226 based on the relevant property paths. In some embodiments, this construction of a compressed API response 226 may entail recursive or iterative algorithms. For example, the response refiner 150 may recursively iterate through the long calendar API response 222 removing the JSON code related to the following fields/values not included in the filtered property manifest 232: meeting time, meeting location, and meeting attachments.

Finally, the routine concludes at block 414 when the compressed API response 226 is returned to the LLM 172 for use in generating responsive output to the prompt 210. Notably in some embodiments, there may be multiple additional steps between providing the LLM 172 with the compressed API response 226 and the generation (by the LLM 172) of the final responsive output to the prompt 210. For example, responding to Jane's prompt 210 may involve multiple separate calendar API requests 220 (and thus multiple long API responses 222). In such an example, routine 300 may be executed multiple times (e.g., iteratively, in parallel, etc.) as described in FIG. 3 before the LLM 172 generates final responsive output to the prompt 210 that lists meeting attendee email addresses for Jane's November 30^{th} meetings.

FIG. 5 depicts an example architecture of a computing system (referred to as a computing system 500) that can be used to perform one or more of the techniques described herein or illustrated in FIGS. 1-4. The general architecture of the computing system 500 depicted in FIG. 5 includes an arrangement of computer hardware and software modules that may be used to implement one or more aspects of the present disclosure. The computing system 500 may include many more (or fewer) elements than those shown in FIG. 5. It is not necessary, however, that all of these elements be shown in order to provide an enabling disclosure. As illustrated, the computing system 500 includes a processor 510, a network interface 520, a computer readable medium 530, and an input/output device interface 540, all of which may communicate with one another by way of a communication bus. The network interface 520 may provide connectivity to one or more networks or computing systems. The processor 510 may thus receive information and instructions from other computing systems or services via a network (e.g., connecting the computing system 500 and the environment 100).

The processor 510 may also communicate with memory 560. The memory 560 may contain computer program instructions (grouped as modules or units in some embodiments) that the processor 510 executes in order to implement one or more aspects of the present disclosure. The memory 560 may include random access memory (RAM), read only memory (ROM), and/or other persistent, auxiliary, or non-transitory computer readable media. The memory 560 may store an operating system 570 that provides computer program instructions for use by the processor 510 in the general administration and operation of the computing system 500. The memory 560 may further include computer program instructions and other information for implementing one or more aspects of the present disclosure. For example, in one embodiment, the memory 560 includes a user interface module that generates user interfaces (and/or instructions therefor) for display upon a user computing device, e.g., via a navigation and/or browsing interface such as a browser or application installed on the user computing device.

In addition to and/or in combination with the operating system 570, the memory 560 includes an API response compression system 120, which may implement the functionality of the present disclosure.

While the ARC system 120 is shown in FIG. 5 as part of the computing system 500, in other embodiments, all or a portion of the ARC system 120 may be implemented by another computing device. For example, in certain embodiments of the present disclosure, another computing device in communication the computing system 500 may include several modules or components that operate similarly to the modules and components illustrated as part of the computing system 500. In some instances, the ARC system 120 may be implemented as one or more virtualized computing devices. Moreover, the ARC system 120 may be implemented in whole or part as a distributed computing system including a collection of devices that collectively implement the functions discussed herein.

Various additional example embodiments of the disclosure can be described by the following additional clauses:
Clause 1. A computing device for reducing application programming interface (API) responses to use by large language models (LLMs), the computing device comprising:
   computer-readable memory storing executable instructions; and
   a processor in communication with the computer-readable memory and programmed by the executable instructions to:
      receive API response data from an API, wherein the API response data is generated by the API in response to a call to the API;
      generate a property manifest for the API response data, the property manifest identifying a set of fields in the API response data;
      generate a filtered property manifest identifying fields of the API response data determined to be relevant to a prompt made to an LLM;
      generate reduced API response data from at least the API response data and the filtered property manifest, the reduced API response data including one or more values for each field identified in the filtered property manifest as relevant to the prompt made to the LLM and excluding at least one value corresponding to a field of the API response data not identified in the filtered property manifest as relevant to the prompt made to the LLM; and
      process the prompt and the reduced API response data at the LLM to generate an LLM output.
Clause 2. The computing device of Clause 1, wherein the processor is further programmed by the executable instructions to determine that the API response data satisfies criteria for reduction according to at least one of:
   token length of the API response data;
   property count of the API response data; or
   entry count of the API response data.
Clause 3. The computing device of Clause 1, wherein the processor is further programmed by the executable instructions to:
   determine that second API response data does not satisfy criteria for reduction;
   send the second API response data to the LLM; and
   process the prompt and the second API response data at the LLM to generate a second LLM output.
Clause 4. The computing device of Clause 1, wherein the processor is further programmed by the executable instructions to generate the property manifest using an API specification, wherein the API specification provides descriptions of the set of the fields in the API response data.
Clause 5. A computer-implemented method comprising:
   receiving application programming interface (API) response data from an API;
   generating a property manifest for the API response data, the property manifest identifying a set of fields in the API response data;
   generating a filtered property manifest identifying fields of the API response data determined to be relevant to a prompt made to a large language model (LLM);
   generating reduced API response data from at least the API response data and the filtered property manifest, the reduced API response data excluding at least one value corresponding to a field of the API response data not identified in the filtered property manifest as relevant to the prompt made to the LLM; and
   processing the prompt and the reduced API response data at the LLM to generate an LLM output.
Clause 6. The computer-implemented method of Clause 5, further comprising:
   determining that the API response data satisfies criteria for reduction according to at least one of:
   token length of the API response data;
   property count of the API response data; or
   entry count of the API response data.
Clause 7. The computer-implemented method of Clause 5, further comprising:
   determining that second API response data does not satisfy criteria for reduction;
   sending the second API response data to the LLM; and
   processing the prompt and the second API response data at the LLM to generate a second LLM output.
Clause 8. The computer-implemented method of Clause 5, wherein generating the property manifest comprises using an API specification, wherein the API specification provides descriptions of the set of the fields in the API response data.
Clause 9. The computer-implemented method of Clause 5, wherein generating the filtered property manifest comprises excluding a set of values from the API response data.
Clause 10. The computer-implemented method of Clause 5, wherein generating the filtered property manifest comprises using a second LLM to filter the property manifest for the API response data.
Clause 11. The computer-implemented method of Clause 5, wherein generating the property manifest comprises using an API manifest for the API.
Clause 12. The computer-implemented method of Clause 11, wherein generating the reduced API response data comprises masking a Uniform Resource Locator (URL) with a placeholder variable.
Clause 13. One or more non-transitory computer-readable media storing computer-executable instructions that, when executed by a processor, cause the processor to at least:
   receive API response data from an API, wherein the API response data is generated by the API in response to a call to the API;
   generate a property manifest for the API response data, the property manifest identifying a set of fields in the API response data;
   generate a filtered property manifest identifying fields of the API response data determined to be relevant to a prompt made to an LLM;
   generate reduced API response data from at least the API response data and the filtered property manifest, the reduced API response data including one or more values for each field identified in the filtered property manifest as relevant to the prompt made to the LLM and excluding at least one value corresponding to a field of the API response data not identified in the filtered property manifest as relevant to the prompt made to the LLM; and
   process the prompt and the reduced API response data at the LLM to generate an LLM output.
Clause 14. The one or more non-transitory computer-readable media of Clause 13 comprising further instructions that, when executed by the processor, cause the processor to:
   determine that the API response data satisfies criteria for reduction according to at least one of:
   token length of the API response data;
   property count of the API response data; or
   entry count of the API response data.
Clause 15. The one or more non-transitory computer-readable media of Clause 13 comprising further instructions that, when executed by the processor, cause the processor to:
   determine that second API response data does not satisfy criteria for reduction;
   send the second API response data to the LLM; and
   process the prompt and the second API response data at the LLM to generate a second LLM output.
Clause 16. The one or more non-transitory computer-readable media of Clause 13, wherein the computer-executable instructions, when executed by the processor, further cause the processor to generate the property manifest using an API specification, wherein the API specification provides descriptions of the set of the fields in the API response data.
Clause 17. The one or more non-transitory computer-readable media of Clause 13, wherein the computer-executable instructions, when executed by the processor, further cause the processor to generate the filtered property manifest excluding a set of values from the API response data.
Clause 18. The one or more non-transitory computer-readable media of Clause 13, wherein the computer-executable instructions, when executed by the processor, further cause the processor to generate the filtered property manifest using a second LLM to filter the property manifest for the API response data.
Clause 19. The one or more non-transitory computer-readable media of Clause 13, wherein the computer-executable instructions, when executed by the processor, further cause the processor to generate the property manifest using an API manifest for the API.
Clause 20. The one or more non-transitory computer-readable media of Clause 19, wherein the computer-executable instructions, when executed by the processor, further cause the processor to generate the property manifest independent of the API response data.

Depending on the embodiment, certain acts, events, or functions of any of the processes or algorithms described herein can be performed in a different sequence, can be added, merged, or left out altogether (e.g., not all described operations or events are necessary for the practice of the algorithm). Moreover, in certain embodiments, operations or events can be performed concurrently, e.g., through multi-threaded processing, interrupt processing, or multiple processors or processor cores or on other parallel architectures, rather than sequentially.

The various illustrative logical blocks, modules, routines, and algorithm steps described in connection with the embodiments disclosed herein can be implemented as electronic hardware, or combinations of electronic hardware and computer software. To clearly illustrate this interchangeability, various illustrative components, blocks, modules, and steps have been described above generally in terms of their functionality. Whether such functionality is implemented as hardware, or as software that runs on hardware, depends upon the particular application and design constraints imposed on the overall system. The described functionality can be implemented in varying ways for each particular application, but such implementation decisions should not be interpreted as causing a departure from the scope of the disclosure.

Moreover, the various illustrative logical blocks and modules described in connection with the embodiments disclosed herein can be implemented or performed by a machine, such as a processor device, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A processor device can be a microprocessor, but in the alternative, the processor device can be a controller, microcontroller, or state machine, combinations of the same, or the like. A processor device can include electrical circuitry configured to process computer-executable instructions. In another embodiment, a processor device includes an FPGA or other programmable device that performs logic operations without processing computer-executable instructions. A processor device can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor device may also include primarily analog components. For example, some or all of the algorithms described herein may be implemented in analog circuitry or mixed analog and digital circuitry. A computing environment can include any type of computer system, including, but not limited to, a computer system based on a microprocessor, a mainframe computer, a digital signal processor, a portable computing device, a device controller, or a computational engine within an appliance, to name a few.

The elements of a method, process, routine, or algorithm described in connection with the embodiments disclosed herein can be embodied directly in hardware, in a software module executed by a processor device, or in a combination of the two. A software module can reside in RAM memory, flash memory, ROM memory, EPROM memory, EEPROM memory, registers, hard disk, a removable disk, a CD-ROM, or any other form of a non-transitory computer-readable storage medium. An exemplary storage medium can be coupled to the processor device such that the processor device can read information from, and write information to, the storage medium. In the alternative, the storage medium can be integral to the processor device. The processor device and the storage medium can reside in an ASIC. The ASIC can reside in a user terminal. In the alternative, the processor device and the storage medium can reside as discrete components in a user terminal.

Conditional language used herein, such as, among others, "can," "could," "might," "may," "e.g.," and the like, unless specifically stated otherwise, or otherwise understood within the context as used, is generally intended to convey that certain embodiments include, while other embodiments do not include, certain features, elements or steps. Thus, such conditional language is not generally intended to imply that features, elements or steps are in any way required for one or more embodiments or that one or more embodiments necessarily include logic for deciding, with or without other input or prompting, whether these features, elements or steps are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

Disjunctive language such as the phrase "at least one of X, Y, or Z," unless specifically stated otherwise, is otherwise understood with the context as used in general to present that an item, term, etc., may be either X, Y, or Z, or any combination thereof (e.g., X, Y, or Z). Thus, such disjunctive language is not generally intended to, and should not, imply that certain embodiments require at least one of X, at least one of Y, and at least one of Z to each be present.

Unless otherwise explicitly stated, articles such as "a" or "an" should generally be interpreted to include one or more described items throughout this application. Accordingly, phrases such as "a device configured to" are intended to include one or more recited devices. Such one or more recited devices can also be collectively configured to carry out the stated recitations. For example, "a processor configured to carry out recitations A, B and C" can include a first processor configured to carry out recitation A working in conjunction with a second processor configured to carry out recitations B and C. Unless otherwise explicitly stated, the terms "set" and "collection" should generally be interpreted to include one or more described items throughout this application. Accordingly, phrases such as "a set of devices configured to" or "a collection of devices configured to" are intended to include one or more recited devices. Such one or more recited devices can also be collectively configured to carry out the stated recitations. For example, "a set of servers configured to carry out recitations A, B and C" can include a first server configured to carry out recitation A working in conjunction with a second server configured to carry out recitations B and C.

While the above detailed description has shown, described, and pointed out novel features as applied to various embodiments, it can be understood that various omissions, substitutions, and changes in the form and details of the devices or algorithms illustrated can be made without departing from the spirit of the disclosure. As can be recognized, certain embodiments described herein can be embodied within a form that does not provide all of the features and benefits set forth herein, as some features can be used or practiced separately from others. All changes which come within the meaning and range of equivalency of the claims are to be embraced within their scope.

## Claims

1. A computing device for reducing application programming interface (API) responses to use by large language models (LLMs), the computing device comprising:
computer-readable memory storing executable instructions; and
a processor in communication with the computer-readable memory and programmed by the executable instructions to:
receive API response data from an API, wherein the API response data is generated by the API in response to a call to the API;
generate a property manifest for the API response data, the property manifest identifying a set of fields in the API response data;
generate a filtered property manifest identifying fields of the API response data determined to be relevant to a prompt made to an LLM;
generate reduced API response data from at least the API response data and the filtered property manifest, the reduced API response data including one or more values for each field identified in the filtered property manifest as relevant to the prompt made to the LLM and excluding at least one value corresponding to a field of the API response data not identified in the filtered property manifest as relevant to the prompt made to the LLM; and
process the prompt and the reduced API response data at the LLM to generate an LLM output.

2. The computing device of Claim 1, wherein the processor is further programmed by the executable instructions to determine that the API response data satisfies criteria for reduction according to at least one of:
token length of the API response data;
property count of the API response data; or
entry count of the API response data.

3. The computing device of Claim 1, wherein the processor is further programmed by the executable instructions to:
determine that second API response data does not satisfy criteria for reduction;
send the second API response data to the LLM; and
process the prompt and the second API response data at the LLM to generate a second LLM output.

4. The computing device of Claim 1, wherein the processor is further programmed by the executable instructions to generate the filtered property manifest excluding a set of values from the API response data.

5. The computing device of Claim 1, wherein the processor is further programmed by the executable instructions to to generate the filtered property manifest using a second LLM to filter the property manifest for the API response data.

6. The computing device of Claim 1, wherein the processor is further programmed by the executable instructions to generate the property manifest using an API specification, wherein the API specification provides descriptions of the set of the fields in the API response data.

7. A computer-implemented method comprising:
receiving application programming interface (API) response data from an API;
generating a property manifest for the API response data, the property manifest identifying a set of fields in the API response data;
generating a filtered property manifest identifying fields of the API response data determined to be relevant to a prompt made to a large language model (LLM);
generating reduced API response data from at least the API response data and the filtered property manifest, the reduced API response data excluding at least one value corresponding to a field of the API response data not identified in the filtered property manifest as relevant to the prompt made to the LLM; and
processing the prompt and the reduced API response data at the LLM to generate an LLM output.

8. The computer-implemented method of Claim 5, further comprising:
determining that the API response data satisfies criteria for reduction according to at least one of:
token length of the API response data;
property count of the API response data; or
entry count of the API response data.

9. The computer-implemented method of Claim 5, further comprising:
determining that second API response data does not satisfy criteria for reduction;
sending the second API response data to the LLM; and
processing the prompt and the second API response data at the LLM to generate a second LLM output.

10. The computer-implemented method of Claim 5, wherein generating the property manifest comprises using an API specification, wherein the API specification provides descriptions of the set of the fields in the API response data.

11. The computer-implemented method of Claim 5, wherein generating the filtered property manifest comprises excluding a set of values from the API response data.

12. The computer-implemented method of Claim 5, wherein generating the filtered property manifest comprises using a second LLM to filter the property manifest for the API response data.

13. The computer-implemented method of Claim 5, wherein generating the property manifest comprises using an API manifest for the API.

14. The computer-implemented method of Claim 11, generating the property manifest independent of the API response data

15. The computer-implemented method of Claim 11, wherein generating the reduced API response data comprises masking a Uniform Resource Locator (URL) with a placeholder variable.
